(19) Europäisches Patentamt
European Patent Office
Office européen des brevets

(11) Publication number: 0 295 330 A2

(12) # EUROPEAN PATENT APPLICATION

(21) Application number: 87114693.2

(51) Int. Cl.⁴: C09J 3/14

(22) Date of filing: 08.10.87

(30) Priority: 16.06.87 JP 149884/87

(43) Date of publication of application:
21.12.88 Bulletin 88/51

(84) Designated Contracting States:
BE CH DE FR GB IT LI NL SE

(71) Applicant: Kanegafuchi Chemical Industry Co., Ltd.
2-4 Nakanoshima 3-chome
Kita-ku Osaka-shi Osaka-fu(JP)

(72) Inventor: Hirose, Toshifumi
7-2-3, Kaminotani Suma-ku
Kobe-shi Hyogo-ken(JP)
Inventor: Isayama, Katsuhiko
4-8-7, Tsukushigaoka Kita-ku
Kobe-shi Hyogo-ken(JP)
Inventor: Higashi, Mika
Kosumo Haitu A-201 2-28-1, Shimokawahara
Shizuoka-shi Shizuoka-ken(JP)

(74) Representative: Hansen, Bernd, Dr.rer.nat. et al
Hoffmann, Eitle & Partner Patentanwälte
Arabellastrasse 4
D-8000 München 81(DE)

(54) **Acrylic pressure-sensitive adhesive.**

(57) An acrylic pressure-sensitive adhesive comprising:

(A) 100 parts by weight of acrylic polymer comprising units derived from an alkyl acrylate an alkyl group of which has 2 to 14 carbon atoms, and

(B) 1 to 30 parts by weight of polyether having at least one silicon-containing cross-linkable group in a molecule, which has improved tack, particularly at low temperatures and polyolefin adhesivity.

EP 0 295 330 A2

# ACRYLIC PRESSURE-SENSITIVE ADHESIVE

## BACKGROUND OF THE INVENTION

### Field of the Invention

The present invention relates to an acrylic pressure-sensitive adhesive. More particularly, it relates to an acrylic pressure-sensitive adhesive having improved tack, particularly tack at low temperatures and adhesive strength with a polyolefin material.

### Description of the Prior Arts

The pressure-sensitive adhesive is easily adhered on a surface of a substrate under small pressure applied by a finger and used in the forms of an adhesive tape such as a cellophane tape, a vinyl tape for electrical insulation, a masking tape, an adhesive sheet, an adhesive label and the like.

Among properties which the pressure-sensitive adhesive is required to have, following three properties are particularly important:

1. Adhesive strength

The adhesive strength is expressed in terms of a force required to peel off an adhesive product such as the adhesive tape from the substrate after applying pressure on the adhesive tape adhered to the substrate for a sufficient period of time. In many cases, the larger adhesive strength, the better.

2. Tack

"Tack" is a degree of tackiness of the surface of the pressure-sensitive adhesive and a measure of adhesivity of the pressure-sensitive adhesive to the substrate. Generally, the larger tack, the better.

3. Holding power (Creep resistance)

Holding power is expressed in terms of deviation of relative positions of the adhesive product and the substrate, when a force is applied to the substrate in a direction parallel with the adhered surface. The smaller deviation, the better.

The conventionally used pressure-sensitive adhesives include a rubber base pressure-sensitive adhesive which comprises a natural or synthetic rubber as a main component, a tackifier resin, a softener and a filler, and an acrylic pressure-sensitive adhesive which comprises an acrylic copolymer of an acrylate with a polar monomer such as acrylic acid and vinyl acetate.

The rubber base pressure-sensitive adhesive has relatively good tack and adhesive strength and also good adhesivity with polyolefin such as polyethylene and polypropylene to which some adhesives are poorly adhered (hereinafter referred to as "polyolefin adhesivity"). However, the rubber base pressure-sensitive adhesive has insufficient durability such as heat resistance and weather resistance.

The conventional acrylic pressure-sensitive adhesive has good durability although it has insufficient tack and polyolefin adhesivity.

To overcome insufficient polyolefin adhesivity of the acrylic pressure-sensitive adhesive, it is known to add a tackifier resin. By the addition of the tackifier resin, tack is further decreased, particularly at low temperatures, although the polyolefin adhesivity is improved.

## SUMMARY OF THE INVENTION

An object of the present invention is to improve tack, particularly at low temperatures and polyolefin adhesivity of an acrylic pressure-sensitive adhesive without deteriorating durability.

According to the present invention, there is provided an acrylic pressure-sensitive adhesive which comprises:

(A) 100 parts by weight of acrylic polymer comprising units derived from an alkyl acrylate an alkyl group of which has 2 to 14 carbon atoms, and

(B) 1 to 30 parts by weight of polyether having at least one silicon-containing cross-linkable group in a molecule, which silicon-containing cross-linkable group is cross-linkable to produce an elastomer by the formation of a siloxane bond (Si-O-Si).

## DETAILED DESCRIPTION OF THE INVENTION

The acrylic polymer (A) is obtained by polymerizing the alkyl acrylate the alkyl group of which has 2 to 14 carbon atoms optionally with a comonomer copolymerizable with the alkyl acrylate.

Examples of the alkyl acrylate are ethyl, propyl, n-butyl, isobutyl, 1-ethylpropyl, 1-methylpentyl, 2-methylpentyl, 3-methylpentyl, 1-ethylbutyl, 2-ethylbutyl, 3-ethylbutyl, 2-ethylhexyl, 3,5,5-trimethylhexyl, decyl, and dodecyl esters of acrylic acid. The alkyl acrylate may be used individually or a mixture with one or two other alkyl acrylates.

The acrylic polymer (A) may contain a small amount of units derived from the comonomer copolymerizable with the alkyl acrylate. Examples of such comonomer are ethylene, propylene, vinyl chloride, acrylonitirile, alkyl methacrylate, acrylic acid, methacrylic acid, hydroxyethyl acrylate, hydroxypropyl acrylate, glycidyl methacrylate, N-methylolacrylamide, N-butoxymethylacrylamide, N-methylolacrylamide, trimethoxysilylpropyl methacrylate, and a mixture thereof.

The amount of the comonomer to be copolymerized with the alkyl acrylate is from 0.5 to 50 % by weight, preferably from 1 to 20 % by weight based on the total amount of the monomers.

The acrylic polymer (A) preferably contains a group having an active hydrogen such as a carboxylic group, whereby the acrylic pressure-sensitive adhesive can have good tack. The reason for this has not been clarified. It may be supposed that the silicon-containing reactive group in the polyether (B) would react with the group having an active hydrogen so that the acrylic polymer (A) and the polyether (B) could be linked.

The alkyl acrylate and the optional comonomer may be polymerized by a conventional method such as solution polymerization in an organic solvent such as ethyl acetate and toluene, emulsion polymerization in water or an organic solvent in the presence of an emulsifier, or suspension polymerization in water in the presence of a suspension stabilizer.

The molecular weight of the polymer (A) is not critical. Preferably, it is several ten thousand to several million. Preferably, the polymer (A) has an acid number value (KOH mg/g) of larger than 10. When the acid number is 10 or less, its hardening is slow so that its holding power is unstable.

It is essential that the polyether (B) has at least one silicon-containing cross-linkable group in a molecule which silicon-containing cross-linkable group is crosslinkable to produce an elastomer by the formation of a siloxane bond (Si-O-Si) through a silanol condensation reaction.

A specific example of the silicon-containing reactive group is represented by the formula:

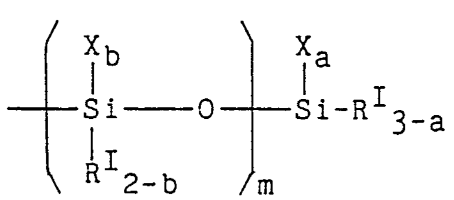

(I)

wherein $R^I$s are the same or different and each a monovalent hydrocarbon group having 1 to 20 carbon atoms or a triorganosiloxy group, a is 0, 1, 2 or 3, b is 0, 1 or 2 provided that $1 \leq a + b \leq 4$, Xs are the same or different and each a hydroxy group or a hydrolyzable group and m is an integer of 0 to 18.

The polyether (B) having the silicon-containing group (I) is prepared by an addition reaction of a hydrogenated silicon compound of the formula:

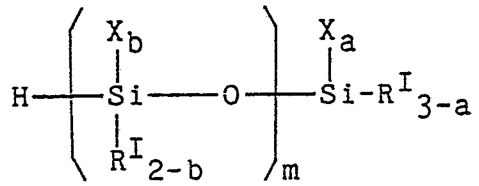

(II)

wherein $R^I$, a, b, X and m are the same as defined above with a polyether having an ethylenically unsaturated group of the formula:

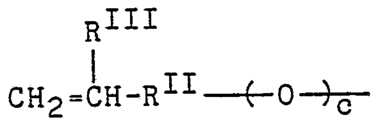

(III)

wherein $R^{II}$ is a divalent organic group having 1 to 20 carbon atoms, $R^{III}$ is a hydrogen atom or a monovalent organic group having 1 to 20 carbon atoms and c is 0 or 1 in the presence of a platinum catalyst. Examples of the platinum catalyst are platinum black, chloroplatinic acid, platinum-alcohol compound, platinum-olefin complex, platinum-aldehyde complex, platinum-ketone complex, and the like.

In the formulas (I) and (II), the residues $R^I$ are the monovalent hydrocarbon group having 1 to 20 carbon atoms which are the same or different, or a triorganosilyl group. Examples of the monovalent hydrocarbon group are alkyl groups such as methyl and ethyl, cycloalkyl groups such as cyclohexyl, aryl groups such as phenyl, aralkyl groups such as benzyl. A typical triorganosilyl group is represented by the formula:

$(R')_3SiO-$

wherein R's are the same or different and each a monovalent hydrocarbon group having 1 to 20 carbon atoms.

In the formulas (I) and (II), the residues X are the silanol groups or the hydrolyzable groups which are the same or different. Examples of the hydrolyzable group are halogen, hydride, alkoxy, acyloxy, ketoximate, amino, amide, aminoxy, mercapto, alkenyloxy, and the like.

The hydrogenated silicon compound (II) includes halogenated silanes (e.g. trichlorosilane, methyldichlorosilane, dimethylchlorosilane, trimethylsiloxydichlorosilane, etc.), alkoxysilanes (e.g. trimethoxysilane, triethoxysilane, methyldimethoxysilane, phenyldimethoxysilane, 1,3,3,5,5,7,7-heptamethyl-1,1-dimethoxytetrasilane, etc.), acyloxysilanes (e.g. methyldiacetoxysilane, trimethylsiloxymethylacetoxysilane, etc.), ketoximatesilanes (e.g. bis(dimethylketoximate)methylsilane, bis(cyclohexylketoximate)methylsilane, bis(diethylketoximate)trimethylsiloxysilane, etc.), hydrosilanes (e.g. dimethylsilane, trimethylsiloxymethylsilane, 1,1-dimethyl-2,2-dimethyldisilane, etc.) and alkenyloxysilanes (e.g. methyldi(isopropenyloxy)silane, etc.). These are not limitative examples.

In the above method, after the reaction of the hydrogenated silicon compound (II) with the polyether having the group of the formula (III), a part or all of the residues X can be converted to other hydrolyzable groups or hydroxyl groups. For example, when the residue X is halogen or hydride, it is preferably converted to alkoxy, acyloxy, aminoxy, alkenyloxy, hydroxyl, etc.

In the formula (III), the residue $R^{III}$ is hydrogen or the monovalent organic group having 1 to 20 carbon atoms, preferably hydrogen or a monovalent hydrocarbon group, more preferably hydrogen. The residues $R^{II}$ are the divalent organic groups having 1 to 20 carbon atoms, which are the same or different, preferably a hydrocarbon group or a hydrocarbon group containing at least one ether, ester, urethane or carbonate linkage, more preferably methylene.

The polyether having the group of the formula (III) may be prepared by a method disclosed in U.S. Patent No. 3,971,751 and Japanese Patent Kokai Publication No. 6097/1979, or a method comprising polymerizing an epoxy compound such as ethyleneoxide and propyleneoxide in the presence of an olefin-containing epoxy compound such as allyl glycidyl ether to introduce the ethylenically unsaturated group in the side chain.

The backbone chain of the polyether (B) to be used according to the present invention may comprise repeating units of the formula:

$-R^{IV}-O-$

wherein $R^{IV}$ is a divalent organic group. The preferable polyether (B) has a backbone chain in which most of the residues $R^{IV}$ in the backbone chain are hydrocarbon groups having 1 to 4 carbon atoms. The specific

examples of the residue $R^{IV}$ are $-CH_2-$, $-CH_2CH_2-$, $-(CH_2)_4-$, $-CH(CH_3)-CH_2-$, $-CH(C_2H_5)-CH_2-$, $-C(CH_3)_2-CH_2-$, and the like. The backbone chain of the polyether (B) may consists of one kind of the repeating unit or two or more kinds of the repeating units. Among them, $-CH(CH_3)-CH_2-$ is preferred.

The polyether (B) has an average molecular weight of 500 to 15,000, preferably 3,000 to 12,000. Such the polyether can be prepared by methods disclosed in Japanese Patent Kokai Publication Nos. 129247/1978 and 6097/1979.

The amount of the polyether (B) is from 1 to 30 parts by weight, preferably from 1 to 20 parts by weight per 100 parts by weight of the acrylic polymer (A). When the amount of the polyether (B) is less than 1 part by weight, the effects of the present invention are not achieved. When the polymer (B) is used in an amount more than 30 parts, the adhesive strength of the acrylic pressure-sensitive adhesive is insufficient.

The acrylic pressure-sensitive adhesive of the present invention can be prepared by mixing the acrylic polymer (A) and the polyether (B) by a conventional method. When the acrylic polymer (A) is prepared by the solution polymerization, the obtained solution of the acrylic polymer is mixed with the polyether (B) to produce a homogeneous solution. When the acrylic polymer (A) is prepared in the aqueous medium in the form of emulsion, the polyether (B) is emulsified and then mixed with the emulsion of the acrylic polymer (A).

The acrylic pressure-sensitive adhesive of the present invention may contain a silanol condensation catalyst for curing the polyether (B). Examples of the silanol condensation catalyst are salts of carboxylic acids (e.g. dibutyltin laurate, dibutyltin maleate, dibutyltin phthalate, etc.), chelate compounds (e.g. dibutyltin bisacetylacetonate, dibutyltin bisethylacetoacetate, etc.) organic tin compounds (e.g. a reaction product of dibutyltinoxide and an ester), amines (e.g. butylamine, laurylamine, monoethanolamine, triethylenetetramine, piperidine, guanidine, 2-ethyl-4-methylimidazole, 1,3-diazabicyclo-[5.4.6]-undecene-7 (DBU), etc.) or their salts with carboxylic acids, organic acidic phosphoric acid compounds such as those of the formulas:

$$(C_4H_9O)_2\underset{\underset{O}{\|}}{P}OH,\ (C_8H_{17}O)_2\underset{\underset{O}{\|}}{P}OH \text{ and } CH_3O\underset{\underset{O}{\|}}{P}(OH)_2,$$

and mixtures of the organic acidic phosphoric acid compounds and the amines. Among them, the acidic compounds and/or the basic compounds are preferred due to good processability. Particularly, the mixture of the organic acidic phosphoric acid having a P-OH linkage and the amine is preferred since it does not greatly increase the viscosity when the catalyst is added and has a long pot life and a large cure rate.

The amount of the silanol condensation catalyst is 0.1 to 10 parts by weight per 100 parts by weight of the acrylic polymer (A). When the catalyst is used in an amount outside the above range, the curing processability and/or the properties of the cured product are deteriorated.

The acrylic pressure-sensitive adhesive of the present invention does not necessarily contain the silanol condensation catalyst. When it does not contain the catalyst, it is preferable to use the acrylic polymer (B) having an acidic or basic group such as a carboxylic group.

The acrylic pressure-sensitive adhesive may contain various kinds of additives for regulating its adhesion characteristics. Examples of such additives are tackifier resins, cross-linking agents for the acrylic pressure-sensitive adhesive, silane compounds, antioxidants, UV absorbing agents, plasticizers, fillers, pigments, surfactants, and the like.

The tackifier resin may be any one of conventionally used ones. Examples of the tackifier resin are resin having polar groups (e.g. rosin ester resin, phenol resin, xylene-phenol resin, terpene-phenol resin, etc.), petroleum resin having comparatively small polarity (e.g. aromatic type, aliphatic-aromatic copolymer type, alicyclic type, etc.), cumarone resin, low molecular weight styrene resin, terpene resin, and the like. Commercially available tackifier resins are Petrosin 80 (Mitsui Petrochemical Industries Co., Ltd., Japan), Neopolymer S (Nippon Petrochemical Co., Ltd., Japan), Tackace A 100 (Mitsui Petrochemical Industries Co., Ltd., Japan), Quinton 1500 (Nippon Zeon Co., Ltd., Japan), FTR 6100 (Mitsui Petrochemical Industries Co., Ltd., Japan), Picolasteck A 75 (Hercules Inc.), Cumarone G-90 (Nittetsu Chemical Co., Ltd., Japan), YS polyester T-115 and S-145 (Yasuhara Oil and Fat Co., Ltd., Japan), Steberiteester 7, Foral 85 and Foral 105 (Hercules Inc.), Neopolymer E-100 (Nippon Petrochemical Co., Ltd., Japan), and the like.

The cross-linking agent of the acrylic pressure-sensitive adhesive is also any one of the conventional ones and includes for example, polyisocyanate compounds, polyglycidyl compounds, melamine resins, urea resins, polyvalent metal salts, etherified amino resins, acids, acid anhydrides, amines, polymers having carboxylic groups, etc.

A typical silane compound is a silane coupling agent. Examples of the silane coupling agent are alkylalkoxysilanes (e.g. methyltrimethoxysilane, dimethyldimethoxysilane, trimethylmethoxysilane, n-propyltrimethoxy silane, etc.), alkylisopropenoxysilanes (e.g. dimethyldiisopropenoxysilane, methyltriisopropenoxysilane, γ-glycidoxypropylmethyldiisopropenoxysilane, etc.), alkoxysilanes having a functional group or groups (e.g. γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-((β-aminoethyl)-aminopropylmethyldimethoxysilane, γ-mercaptopropyltrimethoxysilane, γ-mercaptopropylmethyldimethoxysilane, etc.), silicone varnishes, polysiloxanes, silanol compounds (e.g. trimethylsilanol, triethylsilanol, triphenylsilanol, diphenylmethylsilanol, phenyldimethylsilanol, diphenylsilanediol, etc.), hexamethyldisilazane, ethyl silicate, and the like.

The acrylic pressure-sensitive adhesive of the present invention is applied as an adhesive on various substrates such as a tape, a sheet, a label and a foil. For example, the acrylic pressure-sensitive adhesive of the present invention is coated on a substrate such as a film of a synthetic resin or a modified natural resin, a sheet of paper, a fabric, a metal foil, a metallized plastic foil and an asbestos or glass fiber fabric and heated to cure it. Thereby, an adhesive sheet, tape or label can be produced.

The present invention will be hereinafter explained further in detail by following examples.

## Preparation Example 1

To an autoclave equipped with a stirrer, polypropyleneoxide prepared from polypropyleneglycol by introducing allylether groups at 98 % of chain ends having average molecular weight of 8,000 (800 g) was added. Methyldimethoxysilane (20 g) and then a catalyst solution of chloroplatinic acid (a solution of $H_2PtCl_6.6H_2O$ (8.9 g) in a mixed solvent of isopropylalcohol (18 ml) and tetrahydrofuran (160 ml)) (0.34 ml) were added ant the reaction was continued at 80 °C for 6 hours.

To find the reaction conversion, the unreacted silane groups were analyzed by gas chromatography and IR spectroscopic analysis. 84 % of the chain ends were replaced by the silane groups, and polyether had, at its chain ends, groups of the formula:

$$(CH_3O)_2\overset{\overset{\large CH_3}{|}}{Si}-CH_2CH_2CH_2O-.$$

## Preparation Example 2

In a reactor, a monomer mixture shown in Table 1, toluene (150 g) and, as a polymerization initiator, benzoyl peroxide were charged and reacted at 80 °C for 8 hours to obtain a reaction mixture containing an acrylic polymer (A, B, C or D) (solid content, about 40 %). The properties (acid value and viscosity at 25 °C) of the reaction mixture are shown in Table 1.

Table 1

| Acrylic polymer No. | Monomer mixture (g) | | | | Viscosity (poise) | Acid value*1) (KOH mg/g) |
|---|---|---|---|---|---|---|
| | Butyl acrylate | 2-Ethylhexyl acrylate | Acrylic acid | Acrylonitrile | | |
| A | 50 | 45 | 5 | 0 | 50 | 25.5 |
| B | 97 | 0 | 3 | 0 | 20 | 14.9 |
| C | 94 | 0 | 6 | 0 | 80 | 32.5 |
| D | 93 | 0 | 5.5 | 2 | 130 | 29.3 |

*1) Acid value per solid contents.

Preparation Example 3

A silanol condensation catalyst was prepared by mixing

$$(C_8H_{17}O)_2\overset{\overset{O}{\|}}{P}\text{-}OH\ (3.0\ g)$$

and $(CH_3)_2N(CH_2)_{11}CH_3$ (1.9 g) in toluene (4.9 g).

In Examples, tack, adhesive strength and holding power (creep resistance) were measured according to the following manners:

(a) Tack

Tack was measured according to the J. Dow type rolling ball method at 23° C or 5° C.

(b) Adhesive strength

An adhesive tape was adhered on a stainless steel plate in an area of 50 mm x 150 mm or a polyethylene plate in an area of 100 mm x 150 mm and kept standing for 60 minutes at 23° C. Thereafter, the adhesive tape was subjected to a 180 degree peeling test at 23° C at a peel rate of 300 mm/min. The force required to peel off the tape was measured.

(c) Holding Power

An adhesive tape was adhered on a stainless steel plate in an area of 25 mm x 25 mm. A moving distance after 60 minutes under static load of 1 kg at 80° C was measured.

Examples 1-10

To the acrylic polymer A obtained in Preparation Example 2, a predetermined amount of the polyether obtained in Preparation Example 1 was added and homogeneously mixed. To the resulting mixture, a predetermined amount of the silanol condensation catalyst obtained in Preparation Example 3 or a polyisocyanate cross-linking agent for the acrylic polymer (Coronate L, Nippon Polyurethane Industry Co., Ltd., Japan) was added and again homogeneously mixed to prepare an acrylic pressure-sensitive adhesive solution.

The adhesive solution was coated on a polyester film of 25 µm in thickness in such an amount that the thickness of the adhesive after drying was 20 µm, dried and cured at 120° C for 3 minutes.

The prepared adhesive sheet was tested for its adhesion properties. The results are shown in Table 2, in which the amounts are parts by weight.

Comparative Examples 1-2

In the same manner as in Example 1 but using no polyether, the acrylic pressure-sensitive adhesive was prepared. The results are shown in Table 2.

As is apparent from these results, the acrylic pressure-sensitive adhesive of the present invention has improved adhesion properties.

Table 2

| | Example No. | | | | | | | | | | C. Ex. No. | |
|---|---|---|---|---|---|---|---|---|---|---|---|---|
| | 1 | 2 | 3 | 4 | 5 | 6 | 7 | 8 | 9 | 10 | 1 | 2 |
| Composition | | | | | | | | | | | | |
| Acrylic polymer A (dry weight) | 100 | 100 | 100 | 100 | 100 | 100 | 100 | 100 | 100 | 100 | 100 | 100 |
| Polyether | 5 | 10 | 15 | 20 | 30 | 1 | 3 | 5 | 10 | 20 | - | - |
| Catalyst | 0.5 | 1 | 1.5 | 2 | 3 | - | - | - | - | - | - | - |
| Colonate L | - | - | - | - | - | 1 | 1 | 1 | 1 | 1 | - | 1 |
| Tack at 23 $^\circ$C | 18 | 20 | 25 | 25 | 25 | 10 | 12 | 12 | 15 | 16 | 12 | 8 |
| at 5 $^\circ$C | 6 | 6 | 8 | 8 | 9 | 2 | 2 | 3 | 4 | 6 | <1 | <1 |
| Adhesive strength (g/cm) | 490 | 465 | 500 | 395 | 300 | 490 | 470 | 500 | 460 | 420 | 580 | 480 |
| Holing power (mm) | *1) | 60 | 0 | 0 | 0 | 0.1 | 0.1 | 0 | 0 | 0 | *2) | 0.1 |

*1) After 10 minutes, the adhesive sheet dropped.
*2) After 30 seconds, the adhesive sheet dropped.

Examples 11-20

To the acrylic polymer B, C or D obtained in Preparation Example 2, a predetermined amount of the polyether obtained in Preparation Example 1 was added and homogeneously mixed. To the resulting mixture, a predetermined amount of the silanol condensation catalyst or a polyisocyanate cross-linking agent for the acrylic polymer (Coronate L) and, as the tackifier resin, Foral 105 were added and again homogeneously mixed to prepare an acrylic pressure-sensitive adhesive solution.

The adhesive solution was coated on a polyester film of 25 μm in thickness in such an amount that the thickness of the adhesive after drying was about 35 μm and dried at 80 $^\circ$C for 2 minutes followed by aging at 40 $^\circ$C for 7 days.

The prepared adhesive sheet was tested on its adhesion properties. The results are shown in Table 3, in which the amounts are parts by weight.

Comparative Examples 3-8

In the same manner as in Example 11 but using no polyether, an acrylic pressure-sensitive adhesive was prepared. Its adhesion properties are shown in Table 3.

As is apparent from these results, the acrylic pressure-sensitive adhesive of the present invention has improved adhesion properties.

Table 3

| | Example No. | | | | | | | | | | Comparative Example No. | | | | | |
|---|---|---|---|---|---|---|---|---|---|---|---|---|---|---|---|---|
| | 11 | 12 | 13 | 14 | 15 | 16 | 17 | 18 | 19 | 20 | 3 | 4 | 5 | 6 | 7 | 8 |
| Composition | | | | | | | | | | | | | | | | |
| Acrylic polymer B | 100 | 100 | 100 | 100 | 100 | - | - | - | - | - | 100 | 100 | - | - | - | - |
| Acrylic polymer C | - | - | - | - | - | 100 | 100 | - | 100 | - | - | - | 100 | - | 100 | - |
| Acrylic polymer D (dry weight) | - | - | - | - | - | - | - | 100 | - | 100 | - | - | - | 100 | - | 100 |
| Polyether | 20 | 20 | 3 | 5 | 10 | 20 | 20 | 20 | 20 | 20 | - | - | - | - | - | - |
| Catalyst | 2 | 2 | - | -. | - | 2 | 2 | 2 | 2 | 2 | - | - | | - | - | - |
| Colonate L | - | - | 0.8 | 0.8 | 0.8 | - | - | - | 0.45 | 0.67 | - | 0.8 | - | - | 0.45 | 0.67 |
| Foral 105 (dry weight) | - | 30 | - | - | - | - | 30 | - | 30 | 30 | - | - | - | - | - | - |
| Tack at 23°C | 18 | 16 | 8 | 9 | 10 | 10 | 10 | 19 | 11 | 13 | 10 | 6 | 10 | 12 | 4 | 9 |
| at 5°C | 7 | <1 | 2 | 3 | 4 | 5 | <1 | 6 | <1 | 2 | <1 | <1 | <1 | <1 | < | <1 |
| Adhesive strength (g/cm) | | | | | | | | | | | | | | | | |
| Stainless steel | 445 | 890 | 440 | 450 | 430 | 430 | 630 | 470 | 610 | 450 | 660 | 440 | 550 | 610 | 485 | 550 |
| Polyethylene | 210 | 470 | 190 | 230 | 230 | .260 | 440 | 275 | 400 | 290 | 145 | 120 | 200 | 230 | 130 | 190 |
| Holding power (mm) | 0.1 | 0.3 | 0.1 | 0 | 0 | 0.1 | 0.1 | 0.1 | 0 | 0.1 | *1) | 0.1 | *2) | *1) | 0.1 | 0.1 |

*1) After 1 minute, the adhesive sheet dropped.
*2) After 30 seconds, the adhesive sheet dropped.

## Claims

1. An acrylic pressure-sensitive adhesive comprising:

(A) 100 parts by weight of acrylic polymer comprising units derived from an alkyl acrylate an alkyl group of which has 2 to 14 carbon atoms, and

(B) 1 to 30 parts by weight of polyether having at least one silicon-containing cross-linkable group in a molecule which silicon-containing cross-linkable group is cross-linkable to produce an elastomer by the formation of a siloxane bond.

2. The acrylic pressure-sensitive adhesive according to claim 1, wherein the acrylic polymer (A) is a copolymer of 50 to 99.5 % by weight of the alkyl acrylate the alkyl group of which has 2 to 14 carbon atoms and 0.5 to 50 % by weight of a comonomer copolymerizable with said alkyl acrylate.

3. The acrylic pressure-sensitive adhesive according to claim 1, wherein the silicon-containing cross-linkable group is a group comprising a silicon atom to which a hydrolyzable group is attached.

4. The acrylic pressure-sensitive adhesive according to claim 1, wherein the polyether (B) comprises a backbone chain consisting of a polymer of alkyleneoxide having 1 to 4 carbon atoms.

5. The acrylic pressure-sensitive adhesive according to claim 1, wherein the polyether (B) has a molecular weight of 500 to 15,000.